## Europäisches Patentamt
## European Patent Office
## Office européen des brevets

(11) Numéro de publication: **0 348 263 B1**

## (12) FASCICULE DE BREVET EUROPEEN

(45) Date de publication de fascicule du brevet: **21.09.94**

(51) Int. Cl.5: **B01J 37/02**, B01D 53/36, B01J 23/00

(21) Numéro de dépôt: **89401598.1**

(22) Date de dépôt: **09.06.89**

Le dossier contient des informations techniques présentées postérieurement au dépôt de la demande et ne figurant pas dans le présent fascicule.

(54) **Nouveau catalyseur pouvant être employé dans un procédé de réduction séléctive des oxydes d'azote.**

(30) Priorité: **20.06.88 FR 8808220**

(43) Date de publication de la demande:
**27.12.89 Bulletin 89/52**

(45) Mention de la délivrance du brevet:
**21.09.94 Bulletin 94/38**

(84) Etats contractants désignés:
**AT BE CH DE ES FR GB GR IT LI LU NL SE**

(56) Documents cités:
EP-A- 0 094 206     WO-A-87/06158
DE-A- 2 652 556     FR-A- 2 090 709
US-A- 4 081 408     US-A- 4 256 722
US-A- 4 274 981

(73) Titulaire: **RHONE-POULENC CHIMIE**
**25, quai Paul Doumer**
**F-92408 Courbevoie Cédex (FR)**

(72) Inventeur: **Luck, Francis**
**11, place du Caprice**
**F-93160 - Noisy/Le/Grand (FR)**

(74) Mandataire: **Dutruc-Rosset, Marie-Claude et al**
**RHONE-POULENC CHIMIE**
**Direction des Brevets**
**25, Ouai Paul Doumer**
**F-92408 Courbevoie Cédex (FR)**

EP 0 348 263 B1

**Description**

La présente invention concerne un nouveau catalyseur, un procédé de fabrication de ce catalyseur, ainsi qu'un procédé d'élimination des oxydes d'azote contenus dans un courant gazeux mettant en oeuvre ce catalyseur.

Il est connu par la demande de brevet français FR-A-2 450 784, un catalyseur permettant la réduction en azote des oxydes d'azote NO et $NO_2$ ($NO_x$) contenus dans un courant gazeux, et ceci au moyen d'ammoniac.

Ce catalyseur, constitué d'un support d'alumine poreux et d'une phase catalytiquement active, s'est révélé particulièrement efficace pour la réduction des oxydes d'azote résiduaires formés lors de la synthèse de l'acide nitrique par oxydation de l'ammoniac au moyen d'oxygène. Ce catalyseur présente également l'avantage de pouvoir être utilisé à des températures relativement basses, de l'ordre de 190° à 250°C, d'où une économie d'énergie dans la mesure où les flux gazeux à traiter n'ont pas à être réchauffés. Cependant, il s'est avéré qu'un tel catalyseur présentait des insuffisances lorsqu'il était employé pour la réduction catalytique au moyen d'ammoniac, des oxydes d'azote contenus dans un flux gazeux comportant en outre de faibles teneurs en oxyde de soufre.

En effet, il a été constaté que la présence d'oxyde de soufre $SO_2$ et $SO_3$ ($SO_x$) dans le flux gazeux entrainait une désactivation rapide du catalyseur.

Cette désactivation peut être attribuée à la formation de bisulfate d'ammonium $NH_4 H SO_4$ et de sulfate d'ammonium $(NH_4)_2 SO_4$, par réaction entre les oxydes de soufre, l'eau se trouvant dans le flux gazeux et l'ammoniac indispensable à la réduction catalytique des oxydes d'azote.

Le bisulfate d'ammonium se dépose en effet sur les pores du catalyseur réduisant ainsi leur volume et leur surface. De plus il a été constaté que le bisulfate d'ammonium réagit avec l'alumine pour former des composés $NH_4 Al (SO_4)_2$ et $Al_2 (SO_4)_3$ qui désactivent le catalyseur.

Or de tels flux gazeux contenant des oxydes d'azote $NO_x$ et de faibles teneurs d'oxydes de soufre $SO_x$, se rencontrent fréquemment dans, notamment les gaz d'échappement, les gaz résiduaires de chaudières et autres unités fixes de combustion, tels les gaz résiduaires provenant des centrales thermiques et déjà substantiellement désulfurés.

Des catalyseurs pouvant réduire catalytiquement des $NO_x$ dans des conditions proches de celles précitées, ont déjà été proposés.

Il s'agit de catalyseurs dont la phase active est déposée sur un support de dioxyde de titane.

Cependant ces catalyseurs présentent une activité optimale à des températures de l'ordre de 300 à 400°C. De plus ils sont relativement onéreux dans la mesure où le dioxyde de titane est plus coûteux que l'alumine. Un autre inconvénient de ces supports est leurs faibles propriétés mécaniques.

D'autres documents (EP-A 0094206 et WO 87/06158) décrivent des composés de type spinelle.

Toutefois, ceux-ci sont envisagés pour d'autres applications. Ils sont mis en oeuvre dans un procédé de réformage à la vapeur et dans un procédé de craquage catalytique en lit fluide.

Un objet de la présente invention est de fournir un nouveau catalyseur qui permet notamment la réduction séléctive par l'ammoniac des oxydes d'azote contenus dans un flux gazeux et ceci malgré la présence de $SO_x$ en faibles teneurs dans ledit courant gazeux.

Un autre objet de l'invention est de fournir un catalyseur permettant la réduction sélective des oxydes d'azote à des températures de l'ordre de 200 à 400°C, ces températures pouvant avantageusement être comprises entre 200 et 300°C.

Un troisième objet de la présente invention est un procédé de préparation d'un tel catalyseur.

Pour ce faire, l'invention propose un catalyseur comprenant un support à base d'alumine poreux et au moins une phase catalytiquement active comprenant d'une part, un oxyde de vanadium et, d'autre part, au moins un oxyde de molybdène ou de tungstène ; ledit support comportant une couche superficielle d'au moins un composé de type spinelle.

Selon l'invention, le composé de type spinelle peut avoir comme formule générale :

$M^1 Al_2 O_4$

dans laquelle :

$M^1$ :    peut representer au moins un élément metallique divalent choisi dans le groupe comprenant le magnésium, le zinc, le nickel ou le cobalt.

Selon une caracteristique préféree de l'invention l'élément metallique divalent est le nickel ou le zinc.

La teneur du catalyseur en élément métallique divalent $M^1$, exprime en son oxyde $M^1O$, peut être comprise entre 2 et 45 % et de préférence entre 5 et 30 % en poids par rapport au poids total du

EP 0 348 263 B1

catalyseur.

Dans le cadre de l'invention on préfère utiliser un support de catalyseur à base d'alumine dont le volume de pore de diamètre de plus de 100 nm est supérieur à 25 cm$^3$/100g et est plus particulièrement compris entre 25 et 70 cm$^3$/100 g, dont le volume de pore de diamètre de plus de 30 nm est superieur à 40 cm$^3$/100 g et est plus particulièrement compris entre 43 et 70 cm$^3$/100 g, le volume poreux total étant compris entre 80 et 120 cm$^3$/ 100 g.

La surface dudit support à base d'alumine étant préférentiellement d'au plus 160 m$^2$/g et plus généralement comprise entre 90 et 150 m$^2$/g.

L'alumine pouvant être utilisée présente habituellement les formes cristallines $\gamma$, $\theta$, $\delta$ et $\alpha$ , les formes $\gamma$ , $\theta$ et $\delta$ étant généralement prépondérantes et la forme $\alpha$ se trouvant alors à l'état de traces.

La phase catalytiquement active du catalyseur selon la présente invention comprend donc d'une part un oxyde de vanadium V$_2$O$_5$ et d'autre part un oxyde de molybdène MoO$_3$ ou un oxyde de tungstène WO$_3$. Un rapport pondéral entre V$_2$O$_5$ et MoO$_3$ ou WO$_3$ compris entre 1 et 0,1 est préféré.

Ladite phase active peut comprendre en outre un oxyde de fer et/ou de cobalt.

La teneur en phase active du catalyseur peut être comprise entre 0,5 et 50 % en poids et de préférence entre 2 et 30 % en poids par rapport au poids total du catalyseur.

La présente invention a également pour but un procédé de préparation d'un catalyseur tel que décrit précédemment.

Ce procédé consiste, dans une première étape, à imprégner un support d'alumine poreux en forme par exemple de billes ou de granulés, avec une solution d'au moins un composé d'un élément métallique divalent M$^1$, la concentration dudit composé dans la solution étant telle que la teneur finale en élément métallique M$^1$ soit comprise dans les intervalles précédemment définis.

Le support d'alumine ainsi traité est, dans une deuxième étape, séché pendant environ une demi-heure à 6 heures à des températures comprises entre 100 et 200°C. Puis l'on procède à une opération de calcination conduite génèralement sous air à des températures de l'ordre de 700 a 1000°C et de préférence de l'ordre de 750 à 850°C, pendant environ 1 à 6 heures.

On peut alors constater que suite à ce traitement il s'est formé à la surface du support à base d'alumine une couche de composé de type spinelle de formule M$^1$Al$_2$O$_4$.

Les opérations d'imprégnation, de séchage et de calcination décrites ci-dessus peuvent être répétées une ou plusieurs fois.

Les solutions d'imprégnation sont généralement des solutions aqueuses pouvant contenir des sels de nickel, de magnésium, de zinc et/ou de cobalt.

Ces sels peuvent par exemple être des nitrates ou des acétates de ces métaux.

Dans une troisième étape selon le procédé de l'invention, on imprègne le support d'alumine revêtu d'une couche de composé de type spinelle, d'une solution d'au moins un composé de métal fournissant l'oxyde métallique constituant la phase catalytiquement active, la concentration en composé de métal dans la solution étant telle que la teneur finale en oxyde métallique soit comprise dans les intervalles précédemment définis.

Dans une quatrième étape, on sèche le catalyseur pendant environ une demi-heure à 6 heures à des températures comprises entre 100 et 200°C puis on le calcine, généralement sous air, pendant 1 à 3 heures à des températures comprises entre 400 et 600°C, de préférence entre 450 et 550°C.

Les solutions d'impregnation sont generalement des solutions aqueuses pouvant contenir des sels de metaux précurseurs des oxydes de vanadium, de molybdene, de tungstene, de fer et/ou de cobalt.

A titre de sels on peut citer les sels d'ammonium tels que le dimolybdate d'ammonium, l'heptamolybdate d'ammonium, le métatungstate d'ammonium.

On peut utiliser comme solution d'impregnation contenant le composé de vanadium, une solution obtenue en dissolvant du pentoxyde de vanadium dans une solution d'acide oxalique.

Les opérations d'impregnation des étapes 1 et 3 peuvent être répetées une ou plusieurs fois, et être suivies à chaque fois des opérations de séchage et de calcination telles que décrites dans les étapes 2 et 4 ci-dessus. L'invention concerne également un procédé de reduction par l'ammoniac des oxydes d'azote au moyen d'un catalyseur tel que décrit ci-dessus.

Pour son utilisation dans le procédé d élimination des oxydes d'azote du courant gazeux les contenant, on charge en général ledit catalyseur dans un reacteur approprié sous forme d'un lit fixe ou d'un lit fluide.

D'une manière typique, le courant gazeux a épurer selon l'invention, est un courant gazeux résiduaire d'un procède chimique ou d'une unité fixe de combustion et contenant entre autres especes :

- de l'azote
- de l'oxygène à une teneur habituellement comprise entre 10000 et 100000 vpm
- des oxydes d'azote NO$_x$ à une teneur généralement comprise entre 100 et 10000 vpm

3

EP 0 348 263 B1

- des oxydes de soufre $SO_x$ à une teneur habituellement comprise entre 1 et 2000 vpm
- et de l'eau a une teneur généralement comprise entre 100 et 200000 vpm

Habituellement, la réduction sélective des $NO_x$ réalisée selon l'invention, exige un rapport moléculaire $NH_3/NO_x$ inférieur à 1,1 et de préférence compris entre 0,8 et 1 selon le taux de transformation recherché et la teneur en $NO_x$ du gaz à traiter.

La pression du courant gazeux à traiter est favorable à la transformation des $NO_x$ en $N_2$.

Elle peut être comprise entre 0,1 et 2 MPa (1 et 20 bar), de préférence entre 0,1 et 1,2 MPa (1 et 12 bar).

La température utilisée pour la mise en oeuvre du procédé de la presente invention, varie en fonction de la vitesse spatiale horaire des gaz à traiter, mais elle est habituellement comprise entre 200 et 400°C, avantageusement entre 200 et 300°C.

La vitesse spatiale horaire (VVH) des gaz à traiter est fonction de la température du catalyseur, une température plus élévée permettant une VVH plus forte pour un résultat donne.

Habituellement, dans les intervalles de températures definis ci-dessus, la VVH est comprise entre 4000 et 250000 $h^{-1}$, de préférence de 7000 à 40000 $h^{-1}$.

L'invention sera mieux comprise en se référant aux exemples illustratifs suivants.

Exemple 1 : Préparation d'un catalyseur A selon l'invention

On utilise pour la préparation d'un catalyseur à une alumine sous forme de billes de 3 mm de diamètre, dont :
- la surface spécifique est de 120 $m^2/g$
- le volume poreux total est de 98 $cm^3/100$ g
- le volume poreux des pores de diamètre supérieur à 100 nm est de 30 $cm^3/100$ g
- le volume poreux des pores de diamètre supérieur à 30 nm est de 43 $cm^3/100$ g

On imprègne 100 g de ce support avec 98 ml d'une solution aqueuse de nitrate de nickel.

Après imprégnation, on sèche le produit obtenu en étuve à 120°C pendant 4 heures, avant de le calciner à 750°C pendant 4 heures sous air.

La teneur en nickel du produit ainsi obtenu s'élève à 20 % en poids, exprimé sous forme oxyde.

On imprègne ensuite ce produit à l'aide d'une solution aqueuse de métatungstate d'ammonium et d'oxalate de vanadyle.

On sèche le produit obtenu à 120°C pendant 4 heures en étuve, puis on calcine pendant 2 heures à 500°C sous air.

La composition du catalyseur A figure au tableau I ci-dessous.

Exemple 2 : Préparation d'un catalyseur B selon l'invention.

On imprègne 100 g d'un support d'alumine tel que défini dans l'exemple 1 avec 98 ml d'une solution aqueuse de nitrate de zinc.

Après imprégnation, on sèche le produit obtenu et on le calcine dans les mêmes conditions que dans l'exemple 1. La teneur en zinc du produit ainsi obtenu, s'élève à 20 % en poids, exprimée sous forme oxyde.

On imprègne ensuite ce produit une deuxième fois à l'aide de la même solution de nitrate de zinc.

Ensuite, on le sèche et on le calcine à nouveau dans les mêmes conditions que dans l'exemple 1.

La teneur en zinc du produit ainsi obtenu s'élève à 40 % en poids, exprimée sous forme oxyde.

On imprègne alors ce produit à l'aide d'une solution aqueuse de métatungstate d'ammonium et d'oxalate de vanadyle, puis on sèche le produit obtenu en étuve à 120°C pendant 4 heures, avant de le calciner pendant 2 heures à 500°C sous air.

La composition du catalyseur B figure au tableau I ci-dessous.

Exemple 3 : Préparation d'un catalyseur C non représentatif de l'invention

On utilise pour la préparation du catalyseur C la même alumine que celle utilisée dans l'éxemple 1.

On imprègne 100 g de ce support à l'aide de 98 ml d'une solution aqueuse de métatungstate d'ammonium et d'oxalate de vanadyle.

Puis on sèche le produit obtenu en étuve à 120°C pendant 4 heures, avant de le calciner pendant 2 heures à 500°C sous air.

La composition du catalyseur C figure au tableau I ci-dessous.

Exemple 4 : Préparation d'un catalyseur D non représentatif de l'invention

On utilise pour la préparation du catalyseur D une silice sous forme de billes de 3 mm de diamètre, dont :
- la surface spécifique est de 250 m$^2$/g
- le volume poreux total est de 55 cm$^3$/100 g
- le volume poreux des pores de diamètre supérieur à 100 nm étant de 13 cm$^3$/g
- et le volume poreux des pores de diamètre supérieur à 30 nm étant de 16 cm$^3$/100 g

On imprègne 100 g de ce support avec 98 ml d'une solution aqueuse de nitrate de nickel.

Après imprégnation, on sèche le produit obtenu en étuve à 120°C pendant 4 heures, avant de le calciner pendant 4 heures à 750°C sous air.

La teneur en nickel du produit ainsi obtenu s'élève à 20 % en poids, exprimé sous forme oxyde.

On imprègne alors ce produit à l'aide d'une solution aqueuse de métatungstate d'ammonium et d'oxalate de vanadyle, puis on sèche le produit obtenu en étuve à 120°C pendant 4 heures, avant de le calciner pendant 2 heures à 500°C sous air.

La composition du catalyseur D figure au tableau I ci-dessous.

Exemple 5 : Evaluation des catalyseurs A, B, C et D.

Les catalyseurs dont les préparations sont décrites dans les exemples précédents sont testés pour déterminer l'efficacité de l'élimination des NO$_x$ et la résistance à la désactivation en présence de SO$_x$, dans un montage comportant des sources régulées en pression et en débit de NO, NO$_2$, SO$_2$, NH$_3$, H$_2$O et N$_2$. Le courant gazeux résultant des mélanges de gaz alimente un réacteur contenant un volume de 25 cm$^3$ de catalyseur et placé dans une enceinte thermostatée, puis passe dans un appareil de mesure des NO$_x$ par chimiluminescence. On mesure l'efficacité d'élimination des No$_x$ par l'équation suivante :

$$\text{Taux d'élimination des NO}_x \text{ (\%)} = \frac{\text{NO}_x \text{ entrée} - \text{NO}_x \text{ sortie}}{\text{NO}_x \text{ entrée}} \times 100$$

dans laquelle :  NO$_x$ entrée = concentration de NO$_x$ à l'entrée du réacteur
NO$_x$ sortie = concentration de NO$_x$ en sortie du réacteur.

Les résultats obtenus sont indiqués dans le tableau I, en utilisant un mélange de gaz contenant :
1500 vpm NO$_x$
150 vpm SO$_x$
1400 vpm NH$_3$
3 % O$_2$
3 % H$_2$O
Complément N$_2$

avec une vitesse spatiale horaire de 8000 h$^{-1}$, le lit catalytique étant porté à une température de 280°C et la pression des gaz à traiter étant de 1 bar absolu.

Les résultats du tableau I montrent que les catalyseurs produits selon l'invention possèdent des performances d'élimination des NO$_x$ et des durabilités supérieures à celles des catalyseurs non conformes à l'invention.

5

EP 0 348 263 B1

Tableau I

| CATALYSEUR | COMPOSITION (% poids) | | | | | | TAUX D'ELIMINATION des $NO_x$ (%) après | | |
|---|---|---|---|---|---|---|---|---|---|
| | WO3 | V205 | NiO | ZnO | Al203 | Si02 | 10 h | 100 h | 900 h |
| A | 7 | 5 | 18 | - | 70 | - | 98,5 | 98,2 | 98,0 |
| B | 6 | 4 | - | 26 | 64 | - | 97,3 | 96,2 | 96,4 |
| C | 7 | 5 | - | - | 88 | - | 95,2 | 83,6 | 10,5 |
| D | 7 | 5 | 18 | - | - | 70 | 25,1 | 24,2 | 21,0 |

**Revendications**

1. Catalyseur utilisé notamment pour la réduction sélective par l'ammoniac des oxydes d'azote $NO_x$, en présence d'oxyde de soufre $SO_x$, comprenant un support à base d'alumine poreux comportant une couche superficielle d'au moins un composé de type spinelle et une phase catalytiquement active, caractérisé en ce que ladite phase catalytiquement active comprend d'une part, un oxyde de vanadium et d'autre part, au moins un oxyde de molybdène ou de tungstène.

2. Catalyseur selon la revendication précédente, caractérisé en ce que le composé de type spinelle a comme formule générale :

$M^1Al_2O_4$

dans laquelle $M^1$ représente au moins un élément métallique divalent choisi dans le groupe comprenant le magnésium, le zinc, le nickel ou le cobalt, de préférence le nickel ou le zinc.

3. Catalyseur selon l'une des revendications 1 ou 2, caractérisé en ce que la teneur en élément métallique divalent $M^1$ exprimé en son oxyde $M^1O$ est comprise entre 2 et 45 %, de préférence entre 5 et 30 %, en poids par rapport au poids total du catalyseur.

4. Catalyseur selon l'une des revendications 1 à 3, caractérisé en ce qu'il comporte un support à base d'alumine dont le volume de pores de diamètre de plus de 100 nm est supérieur à 25 $cm^3$/100 g, dont le volume de pores de diamètre de plus de 30 nm est supérieur à 40 $cm^3$/100 g, le volume poreux total étant compris entre 80 et 120 $cm^3$/100 g, 100 g, et présentant une surface d'au plus 160 $m^2$/g.

5. Catalyseur selon la revendication 4, caractérisé en ce que le volume de pores de diamètre de plus de 100 nm est compris entre 25 et 70 $cm^3$/100 g, et le volume de pores de diamètre de plus de 30 nm est compris entre 43 et 70 $cm^3$/100 g.

6. Catalyseur selon l'une des revendications 4 ou 5, caractérisé en ce que la surface totale du support d'alumine est comprise entre 90 et 150 $m^2$/g.

7. Catalyseur selon l'une des revendications 1 à 6, caractérisé en ce que le support d'alumine comprend les phases cristallines $\gamma$, $\theta$ et $\delta$ et la phase $\alpha$ à l'état de traces.

8. Catalyseur selon l'une des revendications 1 à 7, caractérisé en ce que la phase catalytiquement active comprend d'une part, un oxyde de vanadium $V_2O_5$ et d'autre part, un oxyde de molybdène $MoO_3$ ou de tungstène $WO_3$, avec un rapport pondéral entre $V_2O_5$ et $MoO_3$ ou $WO_3$ compris entre 1 et 0,1.

9. Catalyseur selon l'une des revendications 1 à 8, caractérisé en ce que la phase catalytiquement active comprend également un oxyde de fer et/ou de cobalt.

10. Catalyseur selon l'une des revendications 1 à 9, caractérisé en ce que la teneur en phase catalytiquement active est comprise entre 0,5 et 50 % de préférence, entre 2 et 30 %, en poids par rapport au poids total du catalyseur.

6

**11.** Procédé de préparation d'un catalyseur selon l'une des revendications 1 à 10, caractérisé en ce qu'il consiste à :
a) Imprégner le support d'alumine avec une solution d'au moins un composé métallique divalent $M^1$,
b) Sécher et calciner,
c) Imprégner une solution d'au moins un composé précurseur des oxydes de vanadium et de tungstène ou de molybdène, éventuellement de fer et/ou de cobalt,
d) Sécher et calciner.

**12.** Procédé de préparation selon la revendication 11, caractérisé en ce que les étapes a), b), c) ou d) peuvent être répétées une ou plusieurs fois.

**13.** Procédé de préparation selon l'une des revendications 11 ou 12, caractérisé en ce que les opérations de séchage et de calcination de l'étape b) sont réalisées à des températures comprises, respectivement, entre 100 et 200°C et entre 700 et 1000°C.

**14.** Procédé de préparation selon l'une des revendications 11 ou 12, caractérisé en ce que les opérations de séchage et de calcination de l'étape d) sont réalisées à des températures comprises, respectivement, entre 100 et 200°C et entre 400 et 600°C.

**15.** Procédé de réduction par l'ammoniac des oxydes d'azote contenus dans un courant gazeux, caractérisé en ce qu'il consiste à traiter ledit courant gazeux avec un catalyseur selon l'une quelconque des revendications 1 à 10.

**16.** Procédé selon la revendication précédente, caractérisé en ce que le courant gazeux comprend en outre des oxydes de soufre $SO_x$, la teneur en $SO_x$ du courant gazeux étant comprise entre 1 et 2000 vpm.

**17.** Procédé selon l'une des revendications 15 ou 16, caractérisé en ce qu'il est réalisé à des températures comprises entre 200 et 400°C, de préférence entre 200 et 300°C.

## Claims

**1.** A catalyst which is used in particular for the selective reduction by ammonia of nitrogen oxides $NO_x$, in the presence of sulphur oxide $SO_x$, comprising a porous alumina-base carrier comprising a surface layer of at least one compound of spinel type and a catalytically active phase, characterised in that said catalytically active phase comprises on the one hand a vanadium oxide and on the other hand at least one oxide of molybdenum or tungsten.

**2.** A catalyst according to the preceding claim characterised in that the general formula of the compound of spinel type is:

$$M^1Al_2O_4$$

in which $M^1$ represents at least one divalent metallic element selected from the group comprising magnesium, zinc, nickel or cobalt, preferably nickel or zinc.

**3.** A catalyst according to one of claims 1 and 2 characterised in that the amount of divalent metallic element $M^1$ expressed as its oxide $M^1O$ is between 2 and 45%, preferably between 5 and 30%, by weight with respect to the total weight of the catalyst.

**4.** A catalyst according to one of claims 1 to 3 characterised in that it comprises an alumina-base carrier whose volume of pores of a diameter of more than 100 nm is greater than 25 $cm^3/100g$ and whose volume of pores of a diameter of more than 30 nm is greater than 40 $cm^3/100g$, the total porous volume being between 80 and 120 $cm^3/100g$, and having a surface area of at most 160 $m^2/g$.

**5.** A catalyst according to claim 4 characterised in that the volume of pores of a diameter of more than 100 nm is between 25 and 70 $cm^3/100g$ and the volume of pores of a diameter of more than 30 nm is between 43 and 70 $cm^3/100g$.

6. A catalyst according to one of claims 4 and 5 characterised in that the total surface area of the alumina carrier is between 90 and 150 $m^2/g$.

7. A catalyst according to one of claims 1 to 6 characterised in that the alumina carrier comprises the crystalline phases $\gamma$, $\theta$ and $\delta$ and the phase $\alpha$ in the state of traces.

8. A catalyst according to one of claims 1 to 7 characterised in that the catalytically active phase comprises on the one hand a vanadium oxide $V_2O_5$ and on the other hand a molybdenum oxide $MoO_3$ or a tungsten oxide $WO_3$, with a weight ratio between $V_2O_5$ and $MoO_3$ or $WO_3$ of between 1 and 0.1.

9. A catalyst according to one of claims 1 to 8 characterised in that the catalytically active phase also comprises an oxide of iron and/or cobalt.

10. A catalyst according to one of claims 1 to 9 characterised in that the amount of catalytically active phase is between 0.5 and 50%, preferably between 2 and 30%, by weight with respect to the total weight of the catalyst.

11. A process for the preparation of a catalyst according to one of claims 1 to 10 characterised in that it comprises:
    a) impregnating the alumina carrier with a solution of at least one divalent metallic compound $M^1$,
    b) drying and roasting,
    c) impregnating a solution of at least one compound which is a precursor of the oxides of vanadium and tungsten or molybdenum, possibly iron and/or cobalt, and
    d) drying and roasting.

12. A preparation process according to claim 11 characterised in that steps a), b), c) or d) can be repeated one or more times.

13. A preparation process according to one of claims 11 and 12 characterised in that the drying and roasting operations of step b) are effected at temperatures which are respectively between 100 and 200°C and between 700 and 1000°C.

14. A preparation process according to one of claims 11 and 12 characterised in that the drying and roasting operations of step d) are effected at temperatures which are respectively between 100 and 200°C and between 400 and 600°C.

15. A process for the reduction by ammonia of the nitrogen oxides contained in a gaseous flow characterised in that it comprises treating said gaseous flow with a catalyst according to any one of claims. 1 to 10.

16. A process according to the preceding claim characterised in that the gaseous flow further comprises sulphur oxides $SO_x$, the proportion of $SO_x$ in the gaseous flow being between 1 and 2000 vpm.

17. A process according to one of claims 15 and 16 characterised in that it is carried out at temperatures of between 200 and 400°C, preferably between 200 and 300°C.

**Patentansprüche**

1. Katalysator, der vor allem für die selektive Reduktion von Stickoxiden $NO_x$ mit Ammoniak in Gegenwart von Schwefeloxid $SO_x$ verwendet wird, umfassend einen Träger auf der Basis von porösem Aluminiumoxid mit einer Oberflächenschicht aus mindestens einer Verbindung vom Spinelltyp, und eine katalytisch aktive Phase, dadurch gekennzeichnet, daß die katalytisch aktive Phase zum einen ein Vanadiumoxid und zum anderen mindestens ein Molybdänoxid oder Wolframoxid enthält.

2. Katalysator nach dem vorangegangenen Anspruch, dadurch gekennzeichnet, daß die Verbindung vom Spinelltyp der allgemeinen Formel

$M^1Al_2O_4$

EP 0 348 263 B1

entspricht, in der $M^1$ mindestens ein zweiwertiges metallisches Element, ausgewählt aus der Gruppe bestehend aus Magnesium, Zink, Nickel oder Cobalt, vorzugsweise Nickel oder Zink, bedeutet.

3.  Katalysator nach einem der Ansprüche 1 oder 2, dadurch gekennzeichnet, daß der Gehalt an zweiwertigem metallischem Element $M^1$, ausgedrückt als sein Oxid $M^1O$, 2 bis 45 Gew.-%, vorzugsweise 5 bis 30 Gew.-%, bezogen auf das Gesamtgewicht des Katalysators, ausmacht.

4.  Katalysator nach einem der Ansprüche 1 bis 3, dadurch gekennzeichnet, daß er einen Träger auf der Basis von Aluminiumoxid enthält, dessen Volumen von Poren mit einem Durchmesser von mehr als 100 nm mehr als 25 $cm^3$/100 g beträgt und dessen Volumen von Poren mit einem Durchmesser von mehr als 30 nm mehr als 40 $cm^3$/100 g beträgt, wobei das Gesamtporenvolumen im Bereich von 80 bis 120 $cm^3$/100 g liegt, und der eine Oberfläche von höchstens 160 $m^2$/g aufweist.

5.  Katalysator nach Anspruch 4, dadurch gekennzeichnet, daß das Volumen von Poren mit einem Durchmesser von mehr als 100 nm im Bereich von 25 bis 70 $cm^3$/100 g und das Volumen von Poren mit einem Durchmesser von mehr als 30 nm im Bereich von 43 bis 70 $cm^3$/100 g liegt.

6.  Katalysator nach einem der Ansprüche 4 oder 5, dadurch gekennzeichnet, daß die Gesamtoberfläche des Trägers aus Aluminiumoxid 90 bis 150 $m^2$/g beträgt.

7.  Katalysator nach einem der Ansprüche 1 bis 6, dadurch gekennzeichnet, daß der Träger aus Aluminiumoxid die kristallinen Phasen $\gamma$, $\theta$ und $\delta$ sowie spurenweise Phase $\alpha$ enthält.

8.  Katalysator nach einem der Ansprüche 1 bis 7, dadurch gekennzeichnet, daß die katalytisch aktive Phase zum einen Vanadiumoxid $V_2O_5$ und zum anderen Molybdänoxid $MoO_3$ oder Wolframoxid $WO_3$ enthält, wobei das Gewichtsverhältnis zwischen $V_2O_5$ und $MoO_3$ oder $WO_3$ 1 bis 0,1 ausmacht.

9.  Katalysator nach einem der Ansprüche 1 bis 8, dadurch gekennzeichnet, daß die katalytisch aktive Phase ebenfalls ein Eisen- und/oder Cobaltoxid enthält.

10. Katalysator nach einem der Ansprüche 1 bis 9, dadurch gekennzeichnet, daß der Gehalt an katalytisch aktiver Phase 0,5 bis 50 Gew.-%, vorzugsweise 2 bis 30 Gew.-%, bezogen auf das Gesamtgewicht des Katalysators, ausmacht.

11. Verfahren zur Herstellung eines Katalysators nach einem der Ansprüche 1 bis 10, dadurch gekennzeichnet, daß es darin besteht, daß man:
    a) den Träger aus Aluminiumoxid mit einer Lösung mindestens einer Verbindung eines zweiwertigen Metalls $M^1$ imprägniert,
    b) trocknet und calciniert bzw. brennt,
    c) mit einer Lösung aus mindestens einer Vorläuferverbindung der Oxide von Vanadium und Wolfram oder Molybdän, sowie gegebenenfalls von Eisen und/oder Cobalt, imprägniert,
    d) trocknet und calciniert bzw. brennt.

12. Herstellungsverfahren nach Anspruch 11, dadurch gekennzeichnet, daß die Stufen a), b), c) oder d) ein oder mehrere Male wiederholt werden können.

13. Herstellungsverfahren nach einem der Ansprüche 11 oder 12, dadurch gekennzeichnet, daß die Arbeitsgänge Trocknen und Calcinieren bzw. Brennen der Stufe b) bei Temperaturen im Bereich von 100 bis 200°C bzw. im Bereich von 700 bis 1000°C durchgeführt werden.

14. Herstellungsverfahren nach einem der Ansprüche 11 oder 12, dadurch gekennzeichnet, daß die Arbeitsgänge Trocknen und Calcinieren bzw. Brennen der Stufe d) bei Temperaturen im Bereich von 100 bis 200°C bzw. von 400 bis 600°C durchgeführt werden.

15. Verfahren zur Reduktion der in einem Gasstrom enthaltenen Stickoxide mit Ammoniak, dadurch gekennzeichnet, daß man den Gasstrom mit einem Katalysator nach einem der Ansprüche 1 bis 10 behandelt.

9

16. Verfahren nach dem vorangegangenen Anspruch, dadurch gekennzeichnet, daß der Gasstrom zusätzlich Schwefeloxide $SO_x$ enthält, wobei der Gehalt an $SO_x$ des Gasstroms 1 bis 2000 vpm beträgt.

17. Verfahren nach einem der Ansprüche 15 oder 16, dadurch gekennzeichnet, daß es bei Temperaturen im Bereich von 200 bis 400 °C, vorzugsweise von 200 bis 300 °C, durchgeführt wird.